# EUROPÄISCHE PATENTANMELDUNG

(11) **EP 0 981 188 A1**
(43) Veröffentlichungstag der Anmeldung: **23.02.2000**
(21) Anmeldenummer: 98810785.0
(22) Anmeldetag: 17.08.1998
(51) Int. Cl.: H01R 13/719, H04B 3/56

(54) **Anordnung zur Uebermittlung von Nachrichten über ein Niederspannungs-Stromversorgungsnetz sowie Zwischenstück**

(71) Anmelder: Ascom Systec AG, 5506 Mägenwil (CH)
(72) Erfinder: Widmer, Hanspeter, CG-5507 Mellingen (CH)
(74) Vertreter: Roshardt, Werner Alfred, Dipl.-Phys.

(57) **Zusammenfassung**

Ein über einen Netzstecker (11) und eine Netzsteckdose (12), in welche derselbe eingesteckt ist, an ein Niederspannungs-Stromversorgungsnetz (9) angeschlossener PC (10) tauscht über dasselbe mit anderen Geräten mittels Signalen, deren Frequenz zwischen 1 MHz und 40 MHz liegt, Nachrichten aus. Zur Unterdrückung hochfrequenter Störsignale, welche von weiteren Geräten erzeugt werden, die über Netzstecker (11') und weitere, im Nahbereich der genannten Netzsteckdose (12) angeordnete Netzsteckdosen (12') an das Niederspannungs-Stromversorgungsnetz (9) angeschlossen sind oder die durch Reflexionen von Signalen an offenen Leitungsenden entstehen, ist dort jeweils ein in die Netzsteckdose (12') eingestecktes Zwischenstück (1) zwischengeschaltet, in welches der Netzstecker (11') des jeweiligen Geräts eingesteckt ist. Das Zwischenstück (1) verbindet jeden Stift des Netzsteckers (11') mit einer Buchse der Netzsteckdose (12'), wobei jedoch im Phasenleiter und im Nulleiter des Zwischenstücks (1) Drosselspulen liegen, welche Signale im Frequenzbereich der Nachrichtenübertragung blockieren.

## Beschreibung

### Technisches Gebiet

Die Erfindung betrifft eine Anordnung zur Uebermittlung von Nachrichten über ein Niederspannungs-Stromversorgungsnetz gemäss dem Oberbegriff des Anspruchs 1 sowie ein Zwischenstück zur Verwendung in der besagten Anordnung.

### Stand der Technik

Es ist bekannt, über Niederspannungs-Stromversorgungsnetze auch Nachrichten wie Telefongespräche, Telekopien, digitale Daten usw. zu übertragen. Zu diesem Zweck werden die Nachrichten codiert und einem hochfrequenten Trägersignal in bekannter Weise, z. B. durch Frequenzmodulation aufgeprägt. Das modulierte Trägersignal wird vom jeweiligen Sender in das Niederspannungs-Stromversorgungsnetz eingekoppelt und vom jeweiligen Empfänger in gleicher Weise wieder ausgekoppelt und decodiert. Nachrichtenübertragungssysteme, die auf diese Weise ein Stromversorgungsnetz benützen, sind z. B. in WO-A-95/19 537 beschrieben.

Durch verschiedene Vorgänge können jedoch in Niederspannungs-Stromversorgungsnetzen hochfrequente Störungen entstehen, welche das Trägersignal überlagern, mit ausgekoppelt werden und u. U. die Qualität der Nachrichtenübertragung empfindlich beeinträchtigen. Dadurch werden Wiederholungen von Uebermittlungen erforderlich, was eine Reduktion der Datenrate nach sich zieht. Derartige Störungen am Empfänger zu unterdrücken, ist oft nur mit beträchtlichem schaltungstechnischem Aufwand oder gar nicht möglich.

Oft stammen die stärksten Störsignale aus dem Nahbereich am Nachrichtenaustausch beteiligter Geräte. Insbesondere erzeugen ans Netz angeschlossene Geräte aller Art z. B. bei Schaltvorgängen oft Störsignale mit ausgeprägtem hochfrequentem Anteil, die, wenn sie in der Nähe eines auf Empfang geschalteten Geräts ins Netz gelangen, dasselbe fast ungedämpft erreichen und den Nachrichtenempfang empfindlich stören.

Zusätzlich treten oft Reflexionen an offenen Leitungsabschlüssen auf. Es ergibt sich häufig, dass die Länge eines Kabels zwischen Stecker und Gerät gerade ein Viertel der Wellenlänge des Trägersignals oder ein ungeradzahliges Vielfaches davon ausmacht. Dies führt, unabhängig davon, ob das Gerät eingeschaltet ist oder nicht, zu besonders ausgeprägten Reflexionen, die sich dem Trägersignal überlagern. Besonders in Bürogebäuden mit zahlreichen angeschlossenen Geräten geraten auf diese Weise viele Störungen in das Stromversorgungsnetz, die die Qualität der Nachrichtenübertragung stark beeinträchtigen.

Zum Schutz angeschlossener Geräte sind in Netzstecker integrierte Netzfilter bekannt mit Induktivitäten in Phasenleiter und Nulleiter und kapazitiver Kopplung derselben an den mit einer Kabelabschirmung verbundenen Erdleiter (s. z. B. US-A-4 614 924), wobei die Kapazitäten das Volumen des Steckers, besonders seine Länge und auch die Kosten beträchtlich erhöhen. Aus der US-A-5 266 055 ist auch ein dreipoliger Netzstecker bekannt, in welchem nur Induktivitäten eingesetzt sind. In beiden Fällen dienen die Induktivitäten lediglich dem Schutz des angeschlossenen Gerätes vor hochfrequenten Störsignalen. Der Stecker ist aus diesem Grund auch jeweils fest mit dem Gerät verbunden. Die letztgenannte Schrift zeigt auch Verbindungsteile, welche der Unterdrückung von Störungen innerhalb eines Geräts dienen. Sowohl beim Netzstecker als auch beim Verbindungsteil ist jeweils ein kurzer Leiter - ein gerades Leiterstück oder eine Halbschleife - in Ferritmaterial eingebettet. Auf diese Weise können jedoch nur kleine Induktivitäten realisiert werden, die lediglich Signale sehr hoher Frequenz unterdrücken.

### Darstellung der Erfindung

Der Erfindung liegt die Aufgabe zugrunde, eine gattungsgemässe Anordnung anzugeben, die bezüglich ihrer Eignung für die Uebertragung von Nachrichten gegenüber bekannten gattungsgemässen Anordnungen wesentlich verbessert ist sowie ein zur Verwendung in der erfindungsgemässen Anordnung geeignetes Zwischenstück.

Durch die erfindungsgemässe Anordnung zur Uebermittlung von Nachrichten über das Niederspannungs-Stromversorgungsnetz wird dasselbe besser auf die Uebertragung von Nachrichten eingestellt. Störungen der erwähnten Art werden an der Quelle abgefangen bzw. unterbunden und vom Netz ferngehalten. So wird insbesondere der Nachrichtenempfang nicht durch fast ungedämpfte Störungen aus dem Nahbereich beeinträchtigt. Dies gilt besonders dann, wenn die für die Datenübermittlung genutzten Frequenzen verhältnismässig hoch sind. Auch die störende Wirkung von zwischen Steckern und Geräten liegenden Kabelabschnitten wird unterbunden und jeweils ein für das Uebertragungsverhalten des Niederspannungs-Stromversorgungsnetzes günstiger Leitungsabschluss hergestellt.

Durch die Unterdrückung von Störungen steht auch für die Nachrichtenübermittlung mehr Kapazität zur Verfügung, da der gesamte zulässige Störpegel - zu dem auch das Trägersignal zu rechnen ist - meist durch gesetzliche Bestimmungen beschränkt ist. Diese günstige Wirkung wird noch dadurch verstärkt, dass bei niedrigem Störpegel auch ein schwächeres Trägersignal ausreicht.

Das erfindungsgemässe Zwischenstück bietet eine besonders einfache und sehr kostengünstige Möglichkeit, die erfindungsgemässe Anordnung zu realisieren. Es kann sehr kompakt aufgebaut, insbesondere kurz sein und ist bei Bedarf leicht und rasch anzubringen und ebenso leicht auch wieder zu entfernen, so dass das Stromversorgungsnetz von Störungen weitgehend freigehalten werden kann. Der Einsatz von Drosselspulen ist platzsparend und vermeidet Sättigungseffekte.

### Kurze Beschreibung der Zeichnungen

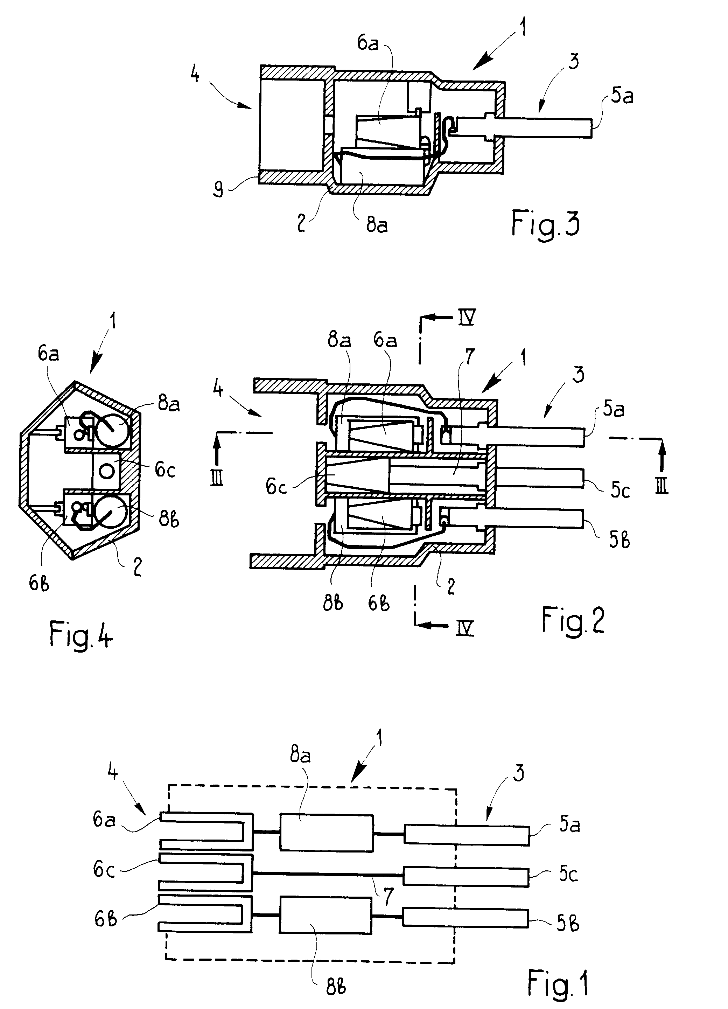

Im folgenden wird die Erfindung anhand von Zeichnungen, die lediglich ein Ausführungsbeispiel darstellen, näher erläutert. Es zeigen
- Fig. 1: eine schematische Darstellung des erfindungsgemässen Zwischenstücks,
- Fig. 2: einen horizontalen Längsschnitt durch das erfindungsgemässe Zwischenstück,
- Fig. 3: einen Schnitt längs III-III in Fig. 2,
- Fig. 4: einen Schnitt längs IV-IV in Fig. 2 und
- Fig. 5: eine schematische Darstellung einer erfindungsgemässen Anordnung zur Uebermittlung von Nachrichten.

### Wege zur Ausführung der Erfindung

Das erfindungsgemässe Zwischenstück 1 weist in einem starren zusammenhängenden Gehäuse 2 aus Kunststoff einen Stecker 3 und an der gegenüberliegenden Gehäusewand eine nach der entgegengesetzten Seite gerichtete Steckdose 4 auf. Der Stecker 3 umfasst drei parallele Stifte 5a,b,c, von denen die Stifte 5a,b in einer Ebene liegen, während der Stift 5c gegenüber dieser Ebene leicht versetzt zwischen den beiden Stiften 5a,b angeordnet ist. Der Stecker 3 ist zum Einstecken in eine normgemässe Netzsteckdose geeignet.

Die Steckdose 4 umfasst drei innerhalb des Gehäuses 2 in einer der Anordnung der Stifte 5a,b,c entsprechenden Konfiguration angeordnete Buchsen 6a,b,c und ist somit mit dem Stecker 3 kompatibel und zur Aufnahme eines demselben entsprechenden normgemässen Netzsteckers geeignet. Der Stift 5c ist mit der Buchse 6c und einem zwischen den beiden angeordneten geraden Verbindungsstück 7 einstückig ausgebildet. Der Stift 5c ist somit mit der Buchse 6c nicht über eine Induktivität, sondern aus Sicherheitsgründen - der Stift 5c, die Verbindung 7 und die Buchse 6c bilden eine Erdleiterverbindung - direkt elektrisch leitend verbunden, so dass die Impedanz der Verbindung vernachlässigbar klein ist.

Der Stift 5a ist dagegen mit der Buchse 6a über eine Drosselspule 8a elektrisch leitend verbunden, die unterhalb der Buchse 6a und neben der Buchse 6c im Gehäuse 2 angeordnet ist. In gleicher Weise ist der Stift 5b mit der Buchse 6b über eine Drosselspule 8b verbunden. Die beschriebene Anordnung ist besonders platzsparend. Die Stifte 5a und 5b bilden mit der Drosselspule 8a bzw. 8b und der Buchse 6a bzw. 6b eine Phasenleiter- bzw. eine Nulleiterverbindung. Die Drosselspulen 8a,b weisen jeweils eine Induktivität von vorzugsweise mindestens 10 µH auf, so dass sie Signale, deren Frequenz wesentlich über der Netzfrequenz von ca. 50 Hz, insbesondere über 1 MHz liegt, stark dämpfen.

Dank der Beschränkung auf Drosselspulen - auf Kapazitäten wird verzichtet - kann das Zwischenstück nicht nur billig hergestellt werden, sondern auch sehr kompakt aufgebaut sein. Insbesondere kann eine grosse Baulänge, die wegen des grösseren Hebels allfällig einwirkender Kräfte die Gefahr des Abbrechens des Zwischenstücks oder auch der Beschädigung oder des Herausreissens von Netzsteckdosen stark erhöhen würde, vermieden werden.

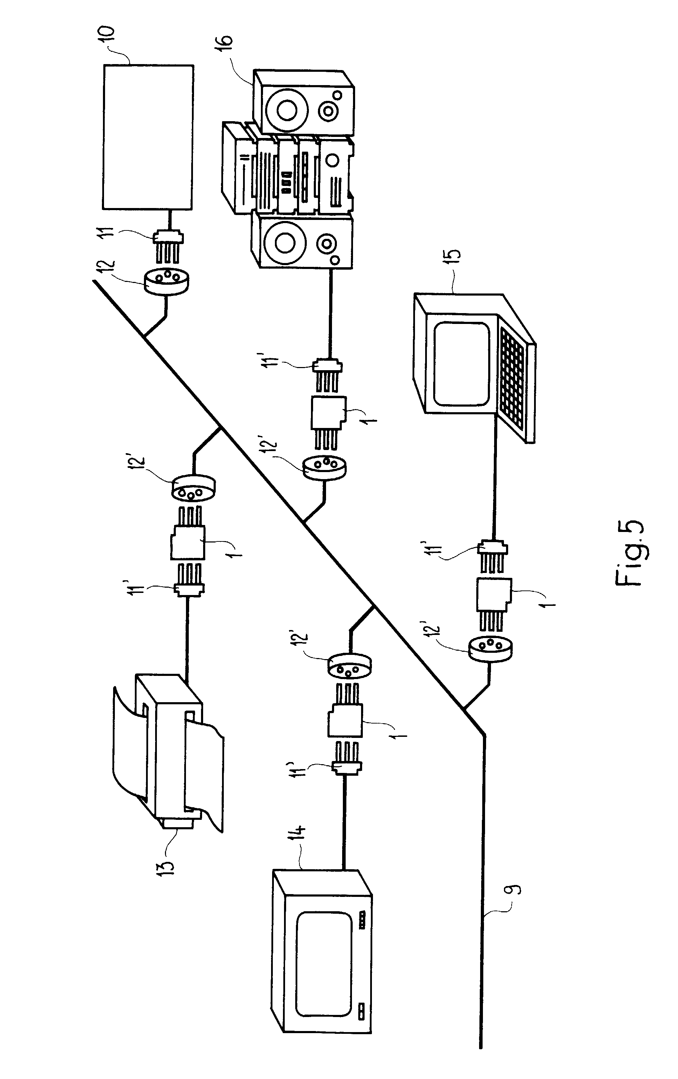

In einer Anordnung zur Uebermittlung von Nachrichten - es kann sich dabei um Telefongespräche, Telekopien, digitale Daten, um beliebige Audio- oder Videosignale oder anderes handeln - über ein Niederspannungs-Stromversorgungsnetz 9 (Fig. 5), das vorzugsweise innerhalb eines öffentlichen oder privaten Gebäudes oder Gebäude komplexes liegt, ist ein am Austausch der Nachrichten beteiligtes Gerät, z. B. ein PC 10, direkt an das besagte Netz angeschlossen, indem sein Netzstecker 11 in eine Netzsteckdose 12 desselben eingesteckt ist. Ueber diese Verbindung wird der PC 10 einerseits mit Strom versorgt, andererseits tauscht er über dieselbe und das Niederspannungs-Stromversorgungsnetz 9 mit anderen, nicht dargestellten Geräten, die ebenfalls mit demselben verbunden sind, Nachrichten aus. Dabei wird eine weit über der Netzfrequenz liegende Trägerfrequenz, die vorzugsweise zwischen 1 MHz und 40 MHz, vorzugsweise bei mindestens 10 MHz liegt, verwendet.

Weitere im Nahbereich der Netzsteckdose 12, mit der der PC 10 verbunden ist, über Netzsteckdosen 12' und Netzstecker 11' am Niederspannungs-Stromversorgungsnetz 9 angeschlossene Geräte, die am Nachrichtenaustausch nicht beteiligt sind, wie ein Drucker 13, ein Fernsehgerät 14, ein Terminal 15 und eine Stereoanlage 16, können, z. B. bei Schaltvorgängen, Störsignale mit hochfrequenten Anteilen erzeugen. Wenn diese den PC 10, mit dem die besagten Geräte über kurze zum Niederspannungs-Stromversorgungsnetz 9 gehörende Leitungen verbunden sind, im wesentlichen ungedämpft erreichten, könnten sie dort nur mit schaltungstechnisch sehr aufwendigen Massnahmen oder gar nicht unterdrückt werden und den Empfang von Nachrichten, denen sie sich überlagern, empfindlich stören.

Aus diesem Grund sind die Geräte, die als Quellen von Störsignalen in Frage kommen, jeweils über ein Zwischenstück 1 mit dem Niederspannungs-Stromversorgungsnetz 9 verbunden. Vorzugsweise ist dabei jeweils der Stecker 3 des Zwischenstücks 1 direkt in die entsprechende Netzsteckdose 12' eingesteckt, während seine Steckdose 4 den Netzstecker 11' des Gerätes aufnimmt. Bei Verwendung von Verlängerungskabeln oder Verteilern kann das Zwischenstück auch an einer anderen Stelle angeordnet sein. In jedem Fall werden von den besagten Geräten ausgehende hochfrequente Signale, insbesondere solche, die im erwähnten für den Nachrichtenaustausch bevorzugten Bereich zwischen 1 MHz und 40 MHz liegen, durch die Drosselspulen 8a,b des Zwischenstücks 1 praktisch vollständig unterdrückt, so dass sie den Nachrichtenempfang am PC 10 nicht stören.

Das Zwischenstück 1 hat ausserdem die Wirkung, das Kabel zwischen dem Stecker und dem jeweiligen Gerät, das vor allem bei ungünstiger Länge einen offenen Leitungsabschluss darstellt und auch bei abgeschaltetem Gerät empfindliche Störungen verursachen kann, für Signale höherer Frequenz praktisch abzukoppeln. Dadurch werden Reflexionen unterbunden und die Summe der Störsignale auf dem Niederspannungs-Stromversorgungsnetz 9 weiter und u. U. sehr wesentlich reduziert.

Durch die Reduktion der Störungen kann die Datenübertragungsrate beträchtlich erhöht werden. Ausserdem kann die Stärke des Trägersignals reduziert werden, so dass gesetzliche Beschränkungen für den Gesamtpegel hochfrequenter Signale auf dem Niederspannungs-Stromversorgungsnetz 9 wesentlich leichter eingehalten werden können.

Im Rahmen der Erfindung sind verschiedene Abwandlungen des Zwischenstücks möglich. So kann es z. B. als Verteiler ausgebildet sein mit mehreren Steckdosen, wobei die einander entsprechenden Buchsen des Phasenleiters und des Nulleiters vorzugsweise mit einer einzigen dem entsprechenden Stift nachgeschalteten Drosselspule verbunden sind. Es kann auch als Verlängerungskabel ausgebildet sein, wobei der Stecker einerseits und die Steckdose oder auch mehrere Steckdosen andererseits in zwei durch ein dreiadriges Kabel verbundenen Gehäuseteilen angeordnet sind. Die Drosselspulen sind dann in einem der beiden Gehäuseteile untergebracht oder zwischen beiden verteilt. Die geschilderte einteilige Ausführung wird jedoch wegen ihres besonders kompakten Aufbaus und der - insbesondere wenn das Zwischenstück jeweils direkt in die Netzsteckdose eingesteckt wird - Einfachheit und Uebersichtlichkeit ihres Einsatzes bevorzugt.

Natürlich ist die Erfindung auch bei Niederspannungs-Stromversorgungsnetzen anderer Norm, z. B. mit drei Phasenleitern analog einsetzbar.

### Bezugszeichenliste

- 1: Zwischenstück
- 2: Gehäuse
- 3: Stecker
- 4: Steckdose
- 5a,b,c: Stifte
- 6a,b,c: Buchsen
- 7: Verbindung
- 8a,b: Drosselspulen
- 9: Niederspannungs-Stromversorgungsnetz
- 10: PC
- 11, 11': Netzstecker
- 12, 12': Steckdosen
- 13: Drucker
- 14: Fernsehgerät
- 15: Terminal
- 16: Stereoanlage

## Patentansprüche

1. Anordnung zur Uebermittlung von Nachrichten über ein Niederspannungs-Stromversorgungsnetz (9) mit mindestens einem Phasenleiter, einem Nulleiter und einem Erdleiter, umfassend mindestens ein mindestens zum Empfang oder zur Aussendung eines Trägersignals zur Uebertragung von Daten, dessen Frequenz wesentlich über der Netzfrequenz liegt, geeignetes Gerät, welches über einen in eine Netzsteckdose (12) eingesteckten Stecker mit dem Niederspannungs-Stromversorgungsnetz (9) verbunden ist und mindestens ein nicht am Austausch von Daten beteiligtes, eine mögliche Störungsquelle darstellendes Gerät, das über einen Netzstecker (11') und eine mit demselben elektrisch leitend verbundene Netzsteckdose (12') an das Niederspannungs-Stromversorgungsnetz (9) angeschlossen ist, **dadurch gekennzeichnet, dass** die Verbindung zwischen dem Netzstecker (11') des mindestens einen eine mögliche Störungsquelle darstellenden Geräts und der Netzsteckdose (12') über ein Zwischenstück (1) mit einem mit der Netzsteckdose (12') verbundenen, insbesondere in dieselbe eingesteckten Stecker (3) und mindestens einer Steckdose (4), mit welcher das Gerät über einen in dieselbe eingesteckten Stecker verbunden ist, hergestellt ist, welches Zwischenstück (1) parallele Leiterverbindungen für die einzelnen Leiter des Niederspannungas-Stromversorgungsnetzes (9) aufweist, wobei in jeder der Leiterverbindungen mit Ausnahme der Erdleiterverbindung eine Induktivität liegt.

2. Anordnung nach Anspruch 1, **dadurch gekennzeichnet, dass** sie innerhalb eines Gebäudes oder Gebäude komplexes liegt.

3. Anordnung nach Anspruch 1 oder 2, **dadurch gekennzeichnet, dass** die Frequenz des Signals zur Uebertragung von Daten zwischen 1 MHz und 40 MHz liegt.

4. Anordnung nach einem der Ansprüche 1 bis 3, **dadurch gekennzeichnet, dass** der Wert der Induktivität jeweils zwischen 10 µH und 20 µH liegt.

5. Zwischenstück (1) zur Verwendung in einer Anordnung nach einem der Ansprüche 1 bis 4, mit, in einem Gehäuse (2), einem Stecker (3) mit mindestens drei Schaltstiften (5a, 5b, 5c) zum Einstecken in eine Netzsteckdose (12'), mit mindestens einer vom Stecker (3) abgewandt angeordneten, mit demselben kompatiblen Steckdose (4) mit Buchsen (6a, 6b, 6c) zur Aufnahme eines Netzsteckers (11'), wobei jeder Schaltstift (5a; 5b; 5c) mit einer Buchse (6a; 6b; 6c) elektrisch leitend verbunden ist, **dadurch gekennzeichnet, dass** ausser bei einem Stift (5c) und einer Buchse (6c), welche durch eine direkte Verbindung (7) verbunden sind, jeweils eine Drosselspule (8a; 8b) zwischen dem Stift (5a; 5b) und der Buchse (6a; 6b) liegt.

6. Zwischenstück nach Anspruch 5, **dadurch gekennzeichnet, dass** die Verbindung (7) zwischen dem Stift (5c) und der Buchse (6c) einstückig mit denselben ausgebildet ist.

7. Zwischenstück nach Anspruch 5 oder 6, **dadurch gekennzeichnet, dass** es genau eine Steckdose (4) aufweist.

8. Zwischenstück nach einem der Ansprüche 5 bis 7, **dadurch gekennzeichnet, dass** das Gehäuse (2) zusammenhängend und starr ausgebildet ist.

9. Zwischenstück nach den Ansprüchen 7 und 8, **dadurch gekennzeichnet, dass** es jeweils genau drei Stifte (5a, 5b, 5c) und drei Buchsen (6a, 6b, 6c) aufweist, und die mit den Drosselspulen (8a, 8b) verbundenen Stifte (5a, 5b) und Buchsen (6a, 6b) jeweils voneinander beabstandet in einer Ebene angeordnet sind und die verbleibende Buchse (6c) gegenüber der besagten Ebene versetzt zwischen ihnen angebracht ist, während die Drosselspulen (8a, 8b) jeweils unter den mit ihnen verbundenen Buchsen (6a, 6b) beidseits neben der verbleibenden Buchse (6c) liegen.

10. Zwischenstück nach einem der Ansprüche 5 bis 9, **dadurch gekennzeichnet, dass** das Gehäuse (2) aus Kunststoff besteht.
